# FASCICULE DE BREVET EUROPEEN

(11) **EP 4 267 927 B1**
(45) Date de publication et mention de la délivrance du brevet: **15.07.2026**
(21) Numéro de dépôt: 21854926.9
(22) Date de dépôt: 17.12.2021
(51) Int. Cl.: G01L 9/00, G01L 15/00

(54) **DISPOSITIF POUR MESURER LOCALEMENT UNE CONTRAINTE MECANIQUE NORMALE EXERCEE PAR UN ELEMENT DE CONTACT**
VORRICHTUNG ZUR ÖRTLICHEN MESSUNG EINER VON EINEM KONTAKTELEMENT AUSGEÜBTEN NORMALEN MECHANISCHEN SPANNUNG
DEVICE FOR LOCALLY MEASURING A NORMAL MECHANICAL STRESS EXERTED BY A CONTACT ELEMENT

(30) Priorité: 22.12.2020 FR 2013888
(43) Date de publication de la demande: 01.11.2023
(73) Titulaire: Paris Sciences et Lettres, 75006 Paris (FR); Centre National de la Recherche Scientifique, 75016 Paris (FR); Ecole Supérieure de Physique et de Chimie Industrielles de la Ville de Paris, 75005 Paris (FR)
(72) Inventeur: PRUVOST, Mickaël, 75013 Paris (FR); GAUTHIER, Anaïs, 75017 Paris (FR); COLIN, Annie, 33130 Begles (FR)
(74) Mandataire: Novagraaf Technologies
(86) Numéro de dépôt international: PCT/FR2021/052378
(87) Numéro de publication internationale: WO 2022/136776

(56) Documents cités:
- WO-A1-2013/029836
- US-A1- 2003 079 547
- US-A1- 2008 202 251
- US-A1- 2008 280 112
- US-A1- 2013 042 693
- US-A1- 2016 273 987

## Description

La présente invention se rapporte au domaine de la mesure d'une contrainte mécanique normale exercée par un élément de contact. Plus particulièrement, l'invention concerne un dispositif pour mesurer localement une contrainte mécanique normale exercée par un élément de contact et un procédé de fabrication d'un tel dispositif.

Dans l'état actuel de la technique, on connaît notamment des dispositifs, à base de silicium, adaptés pour créer des plans de rhéomètre et incluant des capteurs capacitifs et qui permettent de mesurer une contrainte mécanique normale exercée par un élément de contact, par exemple une pression appliquée par un fluide.

Cependant, dans l'état actuel de la technique, l'utilisation des dispositifs connus n'est pas aisée dans la mesure où elle nécessite la mise en œuvre de nombreuses étapes non optimisées économiquement et temporellement. Par ailleurs, les plans de rhéomètre de chacun des dispositifs actuellement connus ne s'adaptent pas à tous les rhéomètres mais seulement à un seul type de rhéomètre particulier.

Il est à noter qu'avec les rhéomètres conventionnels et actuellement utilisés, il est nécessaire de réaliser deux mesures pour obtenir une différence de contrainte normale afin d'obtenir une mesure rhéologique locale de la pression d'un fluide dans des conditions de cisaillement par exemple. Toutefois, le fait de devoir réaliser ces deux mesures induit un risque d'erreur^{[1]} important du fait de l'erreur de mesure engagée par chacune de ces deux mesures.

Par ailleurs, pour mesurer une pression appliquée sur différentes zones d'une même surface sur laquelle un fluide exerce une pression, on réalise actuellement une mesure sur chacune de ces zones en déplaçant le rhéomètre conventionnel.

Cependant, dans l'état actuel de la technique, il n'existe pas de dispositif facile d'utilisation, c'est-à-dire pour lequel sa mise en place n'est pas liée à la mise en œuvre de plusieurs étapes fastidieuses, et optimisé pour mesurer localement, et avec précision, une contrainte mécanique normale exercée par un élément de contact dans la mesure où les dispositifs actuellement connus ne comprennent pas :
- de surfaces de détection suffisamment faibles par rapport à la surface du rhéomètre pour obtenir des mesures locales,
- de capteurs suffisamment sensibles pour mesurer des contraintes de l'ordre de 10 Pa, et
- de capteurs adaptés pour ne pas perturber l'élément de contact, par exemple lors l'écoulement local du fluide, dont on souhaite mesurer la pression.

Un des buts de l'invention est de remédier aux insuffisances des dispositifs de mesure de contraintes mécaniques normales de l'état de la technique.

Les documents US 2016/273987 et US 2003/079547 donnent des exemples de plaque de rhéomètres. Le document US 2008/202251 A1 divulgue un capteur de pression capacitif comportant des couches isolantes et des électrodes supérieures et inférieures formant des capacités. Les couches isolantes comprennent des matériaux polymériques avec une épaisseur allant de 25 micromètres à quelques centaines de micromètres. Un court-circuit entre les électrodes peut être évité en utilisant une couche isolante arrangée sur une des électrodes inférieures ou supérieures.

L'objet de la protection demandée est défini par les revendications.

Selon un premier aspect, l'invention concerne un dispositif pour mesurer localement une contrainte mécanique normale exercée par un élément de contact, ledit dispositif comprenant :
- un substrat comprenant, sur au moins une partie de sa surface, au moins une couche électriquement conductrice, dite électrode inférieure,
- une première couche polymérique électriquement isolante présentant une épaisseur comprise entre 1 µm et 500 µm et comprenant au moins une cavité traversante, la première couche polymérique étant disposée sur le substrat,
- une structure disposée sur la première couche polymérique, la structure comprenant les couches successives suivantes :
   o une couche diélectrique présentant une épaisseur comprise entre 50 µm et 2000 µm et disposée sur la première couche polymérique,
   o une couche monolithique électriquement conductrice, dite électrode supérieure, la couche monolithique présentant une épaisseur comprise entre 5 µm et 50 µm, et
   o une deuxième couche polymérique comprenant une surface destinée à être en contact avec l'élément de contact, la deuxième couche polymérique présentant une épaisseur comprise entre 10 et 500 µm,
   la cavité traversante étant définie par un volume et s'étendant entre la couche électriquement conductrice et la couche diélectrique,
   l'ensemble comprenant la cavité traversante, la couche diélectrique et les électrodes inférieure et supérieure formant un condensateur,
   la structure étant déformable élastiquement de sorte que lorsqu'une contrainte mécanique normale est exercée sur la surface de la deuxième couche polymérique destinée à être en contact avec l'élément de contact, le volume de la cavité traversante varie de sorte à modifier la capacité du condensateur.

La première couche polymérique permet de séparer l'électrode inférieure de l'électrode supérieure et d'isoler la surface destinée à être en contact avec l'élément de contact de l'électrode inférieure.

Par élément de contact, au sens de la présente invention, on entend tout type de liquide, gaz, pâte, solide ou semi-solide apte à exercer une contrainte normale à la surface d'un objet. On peut par exemple cité la peau d'un être vivant.

Par structure déformable élastiquement, au sens de la présente invention, on entend une structure tridimensionnelle déformable élastiquement en compression. De préférence, le module d'Young en compression de la structure est compris entre 0.5 MPa et 5 MPa. Utilisé une structure avec un tel module d'Young permet de garantir le fait que le condensateur est opérationnel sur une large gamme de sensibilité dans la mesure où la structure est trop mole avec un module d'Young en compression inférieur à 0.5 MPa et est trop rigide avec un module d'Young en compression supérieur à 5 MPa.

De préférence, la plus petite dimension de la cavité (longueur ou largeur) peut être comprise entre 0.1 mm et 1 cm.

Il est à noter que chacune des couches constituant la structure est alors déformable élastiquement de sorte à avoir un dispositif qui soit sensible à des pressions positives et/ou à des pressions négatives.

Il est à noter que la couche diélectrique peut être poreuse ou non.

De préférence, la couche diélectrique comprend un matériau électrostricitf de sorte à accroitre la sensibilité de la mesure locale de la contrainte mécanique normale.

Par matériau électrostrictif, au sens de la présente invention, on entend un matériau dont la constante diélectrique varie en fonction de la déformation que subit une couche comprenant un tel matériau.

Par exemple, comme matériaux électrostrictifs, on peut citer des mousses solides comprenant un polymère de polydiméthylsiloxane (communément désigné par l'acronyme PDMS) dans lequel sont intégrés des particules de noir de carbone ou de nanotubes d'argent à une concentration massique comprise entre 0.1 et 20 % par rapport au poids total de la mousse solide. On peut également citer les polymères naturellement électrostrictifs tel le polyfluorure de vinylidène (communément désigné par l'acronyme PVFD) ou de façon générale les matériaux composites comprenant des particules conductrices dispersée au voisinage d'une matrice polymérique mais en dessous du seuil de percolation.

La surface destinée à être en contact avec l'élément de contact est de préférence une surface présentant une rugosité caractérisée par un Ra et un Rp inférieurs à 50 µm, et de préférence compris entre 10 µm et 50 µm. De cette façon, on minimise l'influence de la surface destinée à être en contact avec l'élément de contact sur, par exemple, l'écoulement d'un fluide ou encore sur la force exercée par un solide de sorte à obtenir des valeurs de contrainte mécanique normale représentatives.

Il est à noter que la structure peut en outre comprendre une couche isolante appliquée sur la couche diélectrique. Autrement dit, la couche isolante dans le dispositif peut se situer entre la couche diélectrique et la première couche polymérique. Cette couche isolante peut permettre de moduler la gamme de contrainte mécanique normale exercée sur le dispositif et de permettre de garantir une bonne utilisation du dispositif lorsque des contraintes mécaniques normales élevées s'exercent sur celui-ci. Dans cette configuration, on évite un collage de la couche diélectrique sur la première couche polymérique.

Selon ce premier aspect, l'invention permet l'obtention d'un dispositif pour mesurer localement une contrainte mécanique normale exercée par un élément de contact qui est facile à manipuler et à utiliser. La géométrie de ce dispositif peut être de toute forme de sorte à ce que ce dernier puisse s'adapter, par exemple, aux géométries des rhéomètres conventionnels sans qu'il soit modifié structurellement. Aussi, la géométrie d'un tel dispositif est adaptative en fonction de l'espace dans lequel on souhaite mesurer localement une contrainte mécanique normale exercée par un élément de contact. Par exemple, on peut utiliser ce dispositif dans des géométries type couette et dans des batteries. La surface, du dispositif selon l'invention, destinée à être en contact avec l'élément de contact peut donc être faible par rapport à la surface du rhéomètre utilisé et peut être adaptée à l'élément de contact objet de la mesure de contrainte mécanique normale de sorte à ce que la perturbation de cette surface sur, par exemple, l'écoulement d'un fluide ou encore sur la force exercée par un solide, soit minimisée.

Aussi, avec un tel dispositif, une seule mesure est nécessaire pour obtenir la différence de contrainte mécanique normale afin d'obtenir, par exemple, une mesure rhéologique locale de la contrainte mécanique normale exercée par un élément de contact.

Dans un mode particulier de réalisation, il est avantageux d'avoir un dispositif qui soit suffisamment sensible pour mesurer davantage de faibles contraintes mécaniques normales. Par conséquent, dans ce mode de réalisation, la couche diélectrique peut présenter un module d'Young compris entre 0.5 et 5 MPa.

Dans un mode particulier de réalisation, il est avantageux d'avoir une connexion électrique entre un appareil de mesure et la couche électriquement conductrice pour mesurer en temps réel la variation de capacité du condensateur en fonction de la contrainte mécanique normale exercée par l'élément de contact. Par conséquent, dans ce mode de réalisation, le dispositif peut comprendre en outre une connexion électrique connectée à la couche électriquement conductrice, la connexion électrique étant destinée à relier la couche électriquement conductrice à un élément de mesure de la contrainte mécanique normale exercée par l'élément de contact sur la deuxième couche polymérique en fonction de la variation de capacité du condensateur. De cette façon, il est également possible d'activer la mesure du condensateur quand on le souhaite.

Dans un mode particulier de réalisation, il est avantageux de mesurer la contrainte mécanique normale exercée par l'élément de contact sur l'ensemble d'une surface prédéfinie tout en garantissant une mesure précise. Pour ce faire, on peut mesurer plusieurs contraintes mécaniques normales exercées localement sur plusieurs zones préétablies comprises dans cette surface prédéfinie lorsque le dispositif comprend plusieurs cavités. Par conséquent, dans ce mode de réalisation,
- plusieurs couches électriquement conductrices peuvent être disposées sur le substrat,
- la première couche polymérique peut comprendre plusieurs cavités traversantes,
chacune des cavités traversantes étant définie par un volume et s'étendant entre une des couches électriquement conductrices et la couche diélectrique.

Par ailleurs, avec la présence de plusieurs condensateurs issus de la configuration précitée, il est alors possible de mesurer les forces normales en contact du dispositif et circulant au niveau de plusieurs des condensateurs alors formés. Par exemple, il est alors possible d'établir le comportement de la pression verticale moyenne exercée par un fluide en fonction du taux de cisaillement également.

Selon un deuxième aspect, l'invention concerne un système pour mesurer localement une contrainte mécanique normale exercée par un élément de contact, le système comprenant :
- un dispositif tel que décrit précédemment,
- un rhéomètre comprenant une surface inférieure destinée à être disposée du côté du substrat du dispositif et une surface supérieure destinée à être disposée du côté de la deuxième couche polymérique, et
- un élément de mesure de la contrainte mécanique normale exercée par un élément de contact sur la deuxième couche polymérique en fonction de la variation de capacité du ou des condensateurs.

Par exemple, comme élément de mesure, on peut avoir un élément électronique apte à recueillir et traduire des informations électriques émises par le dispositif qui sont fonction de la variation de capacité du ou des condensateurs.

Ce système présente notamment l'avantage d'être sensible sur une large gamme, à savoir entre 1 et 500 Pa, et également de présenter une haute résolution temporelle pouvant s'étendre de 0.1 kHz jusqu'à atteindre 10 kHz lorsque l'élément de mesure est adapté. Il est également à noter que cette résolution dépend également du nombre de cavités traversantes que contient le dispositif et du nombre maximum de condensateurs auxquels peut être connecté l'élément de mesure. Par exemple, il est possible de fabriquer un dispositif apte à faire des mesures tous les 4 mm², c'est-à-dire un dispositif comprenant entre 10 et 100 cavités (points de mesures) distribuées sur une surface de 4 cm².

Dans un mode particulier de réalisation, il est avantageux de mesurer simultanément différentes zones préétablies d'une surface prédéfinie de contact entre le dispositif et l'élément de contact. Par conséquent, dans ce mode de réalisation, lorsque le dispositif comprend plusieurs condensateurs, l'élément de mesure peut être relié à chaque couche électriquement conductrice de chacun des condensateurs.

L'invention concerne également une utilisation du système tel que décrit précédemment pour mesurer localement une contrainte mécanique normale exercée par un élément de contact, l'utilisation comprenant les étapes successives suivantes :
i. insertion du dispositif entre les surfaces inférieure et supérieure du rhéomètre,
ii. application d'un élément de contact entre la couche supérieure du rhéomètre et la surface de la deuxième couche polymérique, destinée à être en contact avec l'élément de contact, du dispositif,
iii. observation d'une variation de capacité du condensateur, et
iv. déduction de la contrainte mécanique normale exercée localement par l'élément de contact.

Selon un troisième aspect, l'invention concerne un procédé de fabrication d'un dispositif pour mesurer localement une contrainte mécanique normale exercée par un élément de contact, le procédé comprenant les étapes suivantes :
a) formation d'un ensemble comprenant un substrat et une première couche polymérique selon les étapes suivantes :
   a1) fourniture d'un substrat comprenant au moins un orifice débouchant à l'intérieur duquel est appliquée une couche électriquement conductrice, dite électrode inférieure,
   a2) application sur le substrat d'une première couche polymérique présentant une épaisseur comprise entre 1 µm et 500 µm et comprenant au moins une cavité traversante, ladite cavité traversante étant appliquée en vis-à-vis de la couche électriquement conductrice, et
b) formation d'une structure selon les étapes suivantes :
   b1) formation d'un mélange comprenant un polymère, un agent réticulant, des charges conductrices, un dispersant, un solvant, et optionnellement un tensioactif,
   b2) mise en forme dudit mélange pour obtenir une couche diélectrique présentant une épaisseur comprise entre 50 µm et 2000 µm,
   b3) application, sur la couche diélectrique, d'un mélange conducteur comprenant un solvant et un matériau conducteur,
   b4) évaporation du solvant pour obtenir une couche monolithique électriquement conductrice, dite électrode supérieure, présentant une épaisseur comprise entre 5 µm et 20 µm et séchage,
   b5) application, sur la couche monolithique électriquement conductrice, d'un deuxième mélange polymérique pour obtenir une deuxième couche polymérique,
   b6) mise en forme de la deuxième couche polymérique pour obtenir une épaisseur comprise entre 10 et 500 µm et une surface destinée à être en contact avec l'élément de contact, et réticulation,
c) application de la structure sur la première couche polymérique de l'ensemble.

Il est à noter que l'étape b2) de mise en forme se fait de préférence à froid. Par ailleurs, aucune réticulation n'est nécessaire avant la mise en œuvre de l'étape b2) de mise en forme.

Dans une variante de réalisation, le procédé peut comprendre en outre, lors de l'étape a), une étape de création d'une connexion électrique connectée à la couche électriquement conductrice et susceptible de la relier à un élément de mesure.

De préférence, le substrat fourni à l'étape a) peut comprendre plusieurs orifices débouchants à l'intérieur desquelles sont disposées des couches électriquement conductrices et la première couche polymérique disposée à l'étape b) peut comprendre plusieurs cavités traversantes dont chacune est appliquée en vis-à-vis de chacun des couches électriquement conductrices.

L'invention sera mieux comprise à la lecture de la description qui suit, faite uniquement à titre d'exemple, et en référence aux figures en annexe dans lesquelles :
[Fig 1] la figure 1 représente schématiquement une vue en coupe transversale d'un dispositif selon un mode particulier de réalisation de l'invention ;
[Fig 2] la figure 2 représente schématiquement une vue en coupe longitudinale d'un système selon un mode particulier de réalisation de l'invention ;
[Fig 3A] la figure 3A présente une courbe d'étalonnage typique d'un dispositif de l'invention ;
[Fig 3B] la figure 3B illustre le comportement de la capacitance de trois condensateurs compris dans un dispositif selon l'invention et qui est soumis à une contrainte de cisaillement ;
[Fig 4A] la figure 4A illustre le comportement mesuré par un dispositif selon l'invention de la viscosité en fonction de la contrainte normale moyenne d'une solution visqueuse ;
[Fig 4B] la figure 4B illustre le comportement mesuré par un dispositif selon l'invention comprenant une couche diélectrique électrostrictive de la pression normale moyenne en fonction d'une vitesse angulaire d'un rotor ; et
[Fig 5] la figure 5 illustre le comportement mesuré par un dispositif selon l'invention comprenant une couche diélectrique qui n'est pas électrostrictive de la pression normale moyenne en fonction d'une vitesse angulaire d'un rotor.

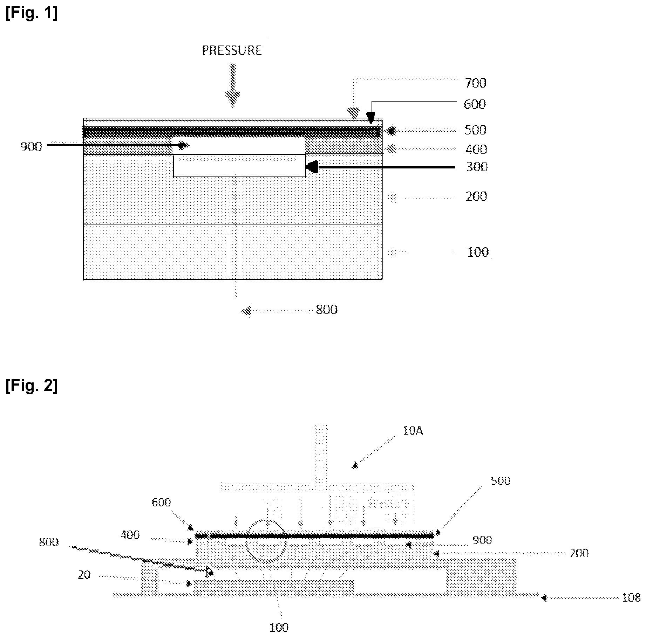

La figure 1 représente un dispositif de rhéologie pour mesurer localement une pression d'un fluide.

Dans ce mode particulier de réalisation de l'invention, l'élément de contact est un fluide qui peut, par exemple, être une suspension, un fluide viscoélastique comme une solution de polyacrylamide hydrolysé (communément désigné par l'acronyme HPAM), ou encore un fluide newtonien comme le glycérol ou l'eau par exemple.

Le dispositif comprend un substrat 200 comprenant, sur au moins une partie de sa surface, une couche électriquement conductrice 300, dite électrode inférieure. Cette couche électriquement conductrice 300 est discontinue de sorte à faire apparaitre plusieurs couches électriquement conductrices 300 disposées à la surface du substrat. Ces couches électriquement conductrices s'apparentent à de multiples portions disposées de manière prédéfinie à la surface du substrat de sorte à faire apparaitre un réseau d'électrodes inférieures appliquées sur le substrat.

Dans ce mode de réalisation préféré, le substrat 200 est de préférence en polymère, et peut en particulier être un film polyester tel que du Mylar^{®}, ou encore un composite de résine époxyde renforcée de fibre de verre, par exemple le matériau FR-4. Toutefois, en variante, le substrat 200 peut, par exemple, être en Kapton^{®} ou encore comprendre une surface en verre. Dans ce mode de réalisation, la couche électriquement conductrice 300 est quant à elle en cuivre. La couche électriquement conductrice 300 peut par exemple être de forme carré (non illustré dans les figures) et présenter les dimensions suivantes : 4 cm de côté et chacune des portions conductrices est de forme carrée de 0.5 cm de côté et l'ensemble des portions conductrices étant disposé en 25 carrés. En variante, la couche électriquement conductrice 300 peut également, par exemple, être en une couche métallique, ou une couche à base de molécules organiques conductrices, comme par exemple une couche de poly(3,4-éthylènedioxythiophène) (communément désigné par l'acronyme PEDOT), ou encore une couche constituée d'un matériau composite comprenant des particules conductrices comme du noir de carbone, du graphème, des nanotubes de carbone, des fils d'argent, ou encore des plaquettes d'argent.

Le dispositif comprend également une première couche polymérique 400 électriquement isolante présentant une épaisseur comprise entre 1 µm et 500 µm et comprenant plusieurs, six par exemple, cavités traversantes 900 (sur la figure 1, une seule cavité est représentée alors que sur la figure 2, sont représentées les six cavités traversantes 900), la première couche polymérique 400 étant disposée sur le substrat 200 et est de préférence de la même forme que ce dernier de manière à se conformer intégralement à sa surface. La première couche polymérique 400 comprend donc plusieurs cavités traversantes 900, chacune des cavités traversantes 900 étant définie par un volume et s'étendant entre une les couches électriquement conductrices 300 et une couche diélectrique 500. Chacune de ces cavités traversantes 900 peuvent être de toute forme et présenter des dimensions comprises entre 1 et 500 µm (micromètres) ou encore entre 0.5 mm et 10 mm. Par exemple, dans ce mode préféré, chacune de ces cavités traversantes 900 est de forme carrée et présente des côtés environ égaux à 12 µm.

Cette couche polymérique 400 s'apparente à une grille polymérique séparant ainsi la surface de mesure des électrodes inférieures.

Dans ce mode de réalisation, la première couche polymérique 400 est en (poly(téréphtalate d'éthylène)) (communément désigné par l'acronyme PET), et est en particulier à base de Mylar^{®}. Toutefois, en variante, la première couche polymérique 400 peut, par exemple, être en polydiméthylsiloxane (communément désigné par l'acronyme PDMS), en polytétrafluoroéthylène à base de Teflon^{®} par exemple, ou encore en polyimide à base Kapton^{®} par exemple.

Le dispositif comprend également une structure disposée sur la première couche polymérique 400. En particulier, cette structure peut se présenter sous la forme d'un objet tridimensionnel dont l'une de ses dimensions est nettement plus faible que les deux autres. Par exemple, cette structure peut présenter sous une forme parallélépipédique définie par une épaisseur comprise entre 65 µm et 2520 µm, et par une longueur et une largeur semblables à celles de la première couche polymérique 400. En particulier, dans ce mode de réalisation, la structure présente une épaisseur environ égale à 600 µm. La structure est par ailleurs conçue pour être déformable élastiquement selon sa largeur et sa longueur.

En particulier, la structure comprend les couches successives suivantes :
o la couche diélectrique 500 présentant une épaisseur environ égale à 500 µm, et disposée sur la première couche polymérique 400,
o une couche monolithique 600 électriquement conductrice, dite électrode supérieure, la couche monolithique 600 présentant une épaisseur environ égale à 25 µm, et
o une deuxième couche polymérique 700 comprenant une surface destinée à être en contact avec le fluide, la deuxième couche polymérique 700 présentant une épaisseur environ égale à 50 µm.

Dans un autre exemple, la structure peut présenter une épaisseur environ égale à 500 µm et comprendre les couches successives suivantes :
o la couche diélectrique 500 présentant une épaisseur environ égale à 5 µm, et disposée sur la première couche polymérique 400,
o une couche monolithique 600 électriquement conductrice, dite électrode supérieure, la couche monolithique 600 présentant une épaisseur environ égale à 200 µm, et
o une deuxième couche polymérique 700 comprenant une surface destinée à être en contact avec le fluide, la deuxième couche polymérique 700 présentant une épaisseur environ égale à 300 µm.

Dans ce mode de réalisation préféré, la couche diélectrique 500 est en un matériau électrostrictif, en particulier l'une de celles divulguées dans la demande de brevet internationale WO2019129388, en particulier dans ses paragraphes [0013] à [0098] de cette demande telle que publiée. Par exemple, la couche diélectrique 500 peut être en un matériau composite comprenant des charges conductrices de noir de carbone et du PDMS, ce matériau présentant une permittivité diélectrique comprise entre 2 et 1000 @ 100 Hz (ou du moins supérieure à celle de l'air 1) et présente un module d'Young environ égal à 2 MPa. Toutefois, cette couche diélectrique peut être toutes couches diélectriques connues de l'homme du métier et configurées pour être élastiquement déformable et pouvoir transmettre un signal électrique de sorte à permettre la mesure de la variation de capacité des condensateurs.

Dans ce mode de réalisation, la couche monolithique 600 est en un matériau composite comprenant du PDMS ainsi que des charges d'argent. Toutefois, en variante, la couche monolithique 600 peut, par exemple, comprendre du PDMS ainsi que des charges comme des nanofils d'argent, des nanotubes, du graphene par exemple, ou des molécules organiques conductrices comme le PEDOT, ou peut également être une couche de PDMS sur laquelle est déposée une couche de métal conducteur à base d'or ou d'argent par exemple. La couche monolithique 600 peut également être en PDMS avec du noir de carbone, en mousse de PDMS avec du noir de carbone, ou encore en mousse de polymères avec des charges conductrices du courant électrique.

Dans ce mode de réalisation, la deuxième couche polymérique 700 est en PDMS et présente un module d'Young proche de celui de la couche diélectrique 500, à savoir environ égal à 2 MPa. Toutefois, en variante, la deuxième couche polymérique 700 peut, par exemple, être en silicone.

Il est à noter également que surface destinée à être en contact avec le fluide de la deuxième couche polymérique 700 peut être striée ou encore micro patternée tout en présentant toutefois une rugosité résiduelle et des défauts de planéité qui ne sont, de préférence, pas supérieurs à des valeurs de l'ordre de 10 à 50 µm.

Ainsi, chacune des cavités traversantes 900 est définie par un volume. Chacun de ces volumes peut être égal ou différent en fonction des sensibilités souhaitées et des géométries prédéfinies. Aussi chacune des cavités traversantes 900 s'étend donc entre la couche électriquement conductrice 300 et la couche diélectrique 500.

On a donc un ensemble comprenant les cavités traversantes 900, la couche diélectrique 500 et les électrodes inférieure 300 et supérieure 600 qui forme autant de condensateurs que de cavités traversantes 900. Il est à noter que l'une au moins de ces cavités traversantes 900 peut être à pression atmosphérique ou sous légère compression lorsque la structure est comprimée.

La structure déformable élastiquement est donc adaptée de sorte que lorsqu'une contrainte mécanique normale est exercée sur la surface de la deuxième couche polymérique 700 destinée à être en contact avec l'élément de contact, le volume de la cavité traversante 900 varie de sorte à modifier la capacité du condensateur.

Le dispositif de ce mode de réalisation comprend en outre une connexion électrique 800 connectée à la couche électriquement conductrice 300. En particulier, cette connexion électrique 800 est destinée à relier la couche électriquement conductrice 300 à un élément de mesure 20 de la contrainte mécanique normale exercée par l'élément de contact sur la deuxième couche polymérique 700 en fonction de la variation de capacité du condensateur.

Ce dispositif peut être fabriqué de la façon suivante.

Tout d'abord, on réalise une étape a) de formation d'un ensemble comprenant le substrat et la première couche polymérique indiqués ci-avant.

Pour ce faire, on met en œuvre une sous-étape a1) de fourniture du substrat 200, puis une sous-étape a2) d'application sur le substrat 200 de la première couche polymérique 400 de sorte à ce que chacune des cavités traversantes 900 se retrouve en vis-à-vis de chacune des portions des couches électriquement conductrice 300.

Par exemple, pour ce faire, on applique une première couche polymérique 400 de PDMS d'environ 5 µm d'épaisseur sur un substrat 200 en Mylar^{®}. Cette première couche polymérique 400 de PDMS comprend des cavités traversantes 900 et a été préalablement déposée à l'aide d'un spin-coater et durcie pendant 1 h à 70 C.

Aussi, l'étape a) de formation de l'ensemble comprend en outre une étape de création de la connexion électrique 800 connectée à chacune des couches électriquement conductrices 300 et susceptible de les relier à un unique élément de mesure 20 qui est de préférence une carte d'acquisition. De cette façon, il est possible de ne considérer la mesure que de certains condensateurs.

Ensuite, on réalise une étape b) de formation de la structure telle que décrit précédemment, selon les étapes suivantes.

Pour ce faire, on met en œuvre une sous-étape b1) de formation d'un mélange comprenant un polymère, un agent réticulant, des charges conductrices, optionnellement un dispersant, un solvant, et optionnellement un tensioactif. Dans ce mode de réalisation préféré, le mélange est l'un de ceux divulgués dans la demande de brevet internationale WO2019129388, en particulier dans ses paragraphes [0099] à [00164] de cette demande telle que publiée. En particulier, on réalise un mélange constitué de gouttelettes d'une dispersion aqueuse de charges de noir de carbone en suspension dans une matrice de PDMS et d'un agent de durcissement.

Par exemple, on prépare une phase huileuse en mélangeant du PDMS (par exemple celui commercialisé sous la dénomination RTV615 Momentive), un agent de durcissement (par exemple celui commercialisé sous la dénomination RTV615 Momentive) de sorte à avoir une concentration en agent de durcissement environ égale à 10% en poids par rapport à la phase PDMS, et un lauryl PEG-8 diméthicone (par exemple celui commercialisé sous la dénomination Silube J208-812, Siltech) de sorte à avoir une concentration en lauryl PEG-8 diméthicone environ égale à 5,0% en poids par rapport à la phase huileuse.

Une phase aqueuse est quant à elle préparée en mélangeant 5 g de gomme arabique (par exemple celle commercialisée par la société Sigma Aldrich), 95 g d'eau déionisée, et des charges de noir de carbone (par exemple la poudre de noir de carbone commercialisée par la société Alfa Aesar). Cette mixture est soniquée en pointe pendant 1 h à 400 W pour disperser de manière homogène les charges de noir de carbone et obtenir la phase aqueuse.

Le mélange est alors préparé en ajoutant progressivement la phase aqueuse à la phase huileuse sous agitation manuelle jusqu'à un rapport massique eau : huile de 80 % en poids.

Dans un autre exemple, on mélange tout d'abord les monomères, l'agent réticulant, et le tensioactif. Par exemple on disperse des particules de noirs de carbone dans une phase de monomère en présence de surfactant. Pour ce faire, on prépare une dispersion de charges conductrices dans de l'eau et du tensioactif. On ajoute goutte à goutte cette dispersion dans le mélange de monomères sous agitation (gradient de cisaillement de 1 à 100 s-1) pour former une émulsion. La proportion de phase organique (monomère+surfactant) est comprise entre 40 et 95% en volume.

L'émulsion ainsi obtenue est étalée sur un film de polymère à l'aide d'un dotor blade. Elle est immergée dans de l'eau et portée à 80°C pour assurer la réticulation pendant 1H. L'ensemble est ensuite séché à l'étuve à 40 °C pendant 10h.

Puis, on réalise une sous-étape b2) de mise en forme de ce mélange pour obtenir la couche diélectrique 500 décrite précédemment. Par exemple, le mélange, qui peut être sous forme d'une pâte, est étalé à l'aide d'un pochoir d'une profondeur de 1,2 mm, ou à l'aide d'un applicateur Zehntner ZUA 2000, sur une surface plastique de 24 mm de diamètre de sorte à obtenir une couche présentant une épaisseur environ égale à 1 µm.

Selon un premier exemple de réalisation de la couche diélectrique 500, une deuxième surface plastique est placée sur le mélange étalé de telle sorte que le mélange reste confiné entre deux surfaces planes. Les matériaux solides sont obtenus en durcissant le polymère PDMS sans évaporation dans un bol d'eau chaude (90 °C) pendant 4 h. L'humidité relative dans ces conditions est de 100 %. Ensuite, la couche de matériau solide est retirée des deux surfaces en plastique et séchée dans un four pendant 1 h à 150 °C. Comme le PDMS est perméable à la vapeur d'eau, des gouttelettes de charge de noir de carbone sont séchées et laissent une structure avec des pores de forme sphérique couverts par des charges de noir de carbone. Ainsi, lorsqu'une pression est appliquée sur cette couche, les pores, qui sont en particulier des micropores (de taille comprise entre 1 et 10 µm) se déforment, ce qui induit une forte variation de sa permittivité et donc de sa capacité.

Selon un deuxième exemple de réalisation de la couche diélectrique 500, après l'étalement, la pâte est durcie selon un procédé en deux étapes. Tout d'abord, elle est d'abord placée dans un bain d'eau désionisée à 70 C pendant 6 heures pour assurer la réticulation du polymère PDMS. Après le durcissement, le solide est laissé à sécher à 70 °C pendant 24 h pour que toute l'eau contenue dans les pores s'évapore. Après le durcissement et le séchage, le mélange se transforme en une mousse solide molle piézocapacitive. Sa relative souplesse (avec un module d'Young de 1,6 MPa) est à l'origine de sa remarquable piézocapacité, source de ses remarquables propriétés piézocapacitives.

Cependant, d'autres mélanges et procédés connus de l'homme du métier peuvent être utilisés ici pour réaliser la couche diélectrique 500, par exemple voir l'enseignement de la référence [2].

Ensuite, on réalise une sous-étape b3) d'application, sur la couche diélectrique 500, d'un mélange conducteur, qui peut se présenter sous la forme d'une pâte, comprenant un solvant, du PDMS, et un matériau conducteur, en particulier des particules d'argent. En particulier, on recouvre la partie supérieure de la couche diélectrique (par exemple à l'aide de l'applicateur Zehntner ZUA 2000) avec le mélange conducteur de sorte à obtenir une couche épaisse de 25 µm qui joue le rôle d'une électrode souple.

On réalise ensuite une sous-étape b4) d'évaporation du solvant pour obtenir la couche monolithique 600 électriquement conductrice décrite ci-avant, dite électrode supérieure. Puis, on procède à un séchage.

On peut maintenant réaliser une sous-étape b5) d'application, sur la couche monolithique 600 électriquement conductrice, d'un deuxième mélange polymérique pour obtenir la deuxième couche polymérique 700. Pour ce faire, une couche protectrice de PDMS est coulée autour de la couche monolithique 600. La couche polymérique 700 peut par exemple suivre la même procédure que la réalisation de la couche diélectrique 500 mais on ne rajoute pas de charges conductrices.

Puis, on réalise une sous-étape b6) de mise en forme de la deuxième couche polymérique 700 pour obtenir l'épaisseur souhaitée et présentant la surface destinée à être en contact avec le fluide telle que décrite précédemment. On procède également à une réticulation du PDMS, par exemple en utilisant de la chaleur, une illumination sous rayons UV ou tous autres moyens connus de l'homme du métier. En particulier, le PDMS, initialement liquide, est laissé au repos pendant 30 minutes à température ambiante pour s'assurer que la surface de mesure (surface destinée à être en contact avec le fluide) est plane. Il est ensuite durci pendant 1h à une température environ égale à 70°C.

Enfin, on met en œuvre une étape c) d'application de la structure sur la première couche polymérique de l'ensemble.

Ainsi, on obtient le dispositif selon le mode particulier de réalisation ci-avant décrit. En particulier, le dispositif comprend plusieurs condensateurs constitués de chacune des cavités traversantes 900 du dispositif ainsi que des électrodes inférieures et supérieures.

Un fois le dispositif fabriqué, on peut, par exemple, l'utiliser dans un système pour mesurer localement une pression d'un fluide (voir figure 2).

Le système comprend le dispositif décrit ci-avant, un rhéomètre comprenant une surface inférieure 10B destinée à être disposée du côté du substrat du dispositif et une surface supérieure 10A destinée à être disposée du côté de la deuxième couche polymérique 700, ainsi qu'un élément de mesure 20 de la pression exercée par le fluide sur la deuxième couche polymérique 700 en fonction de la variation de chacune des capacités des condensateurs.

Le rhéomètre est un rhéomètre conventionnel connu de l'homme du métier.

L'élément de mesure 20 est ici une carte d'acquisition apte à définir une valeur de pression à partir d'une variation de capacité. La carte d'acquisition est reliée à chaque couche électriquement conductrice 300 de chacun des condensateurs.

Il est à noter en particulier qu'on peut utiliser ce système de la façon suivante.

On procède à une étape i. d'insertion du dispositif entre les surfaces inférieure 10B et supérieure 10A du rhéomètre.

Ensuite, on réalise une étape ii. d'application du fluide à analyser entre la couche supérieure 10A du rhéomètre et la surface de la deuxième couche polymérique 700, destinée à être en contact avec le fluide, du dispositif.

Puis, dans une étape iii. d'observation d'une variation de capacité des condensateurs, on contrôle comment le fluide exerce une force de pression sur la deuxième couche polymérique en récoltant, via la carte d'acquisition qui peut être localisée en dessous d'une surface de mesure 100 sur laquelle est disposé le dispositif, les valeurs de variations de capacités de chacun des condensateurs du dispositif.

La carte d'acquisition est de préférence adaptée pour mesurer les capacités de chaque condensateur et formées à une fréquence de 1000 Hz. Cette haute résolution permet de finement mesurer les profils de pressions locales, c'est-à-dire les pressions exercées sur chacune des cavités traversantes 900 en fonction du temps.

Enfin, dans une étape iv. de déduction de la pression du fluide exercée localement, on traduit, par à l'aide de moyens de traitements de données électriques, les valeurs de variations de capacités de chacun des condensateurs en des valeurs représentatives de de la pression effectivement exercée par le fluide sur la deuxième couche polymérique du dispositif 700. Les données électriques peuvent être directement acquises via un port USB et directement exportables sous un logiciel de traitement de données tel que Matlab^{®}.

En effet, lorsque le fluide à analyser est en contact avec la surface destinée à être en contact avec le fluide du dispositif, les cavités traversantes 900 se déforment, par extension également leur volume initial, en réponse aux pressions locales exercées sur la deuxième couche polymérique 700 lorsqu'un fluide est cisaillé entre la surface supérieure d'un rhéomètre et la surface destinée à être en contact avec le fluide. En conséquence chaque cavité traversante 900 voit sa valeur de capacité se modifier. Ces valeurs de capacités sont mesurées dans le temps et l'espace notamment à l'aide de la carte d'acquisition et permettent de remonter au profil de pression après notamment un étalonnage capacité/pression de chacune des cavités traversantes 900.

**Exemple d'utilisation selon un dispositif de l'invention comprenant la couche de diélectrique 500 selon le deuxième exemple de réalisation de la couche diélectrique 500 ci-avant mentionné.**

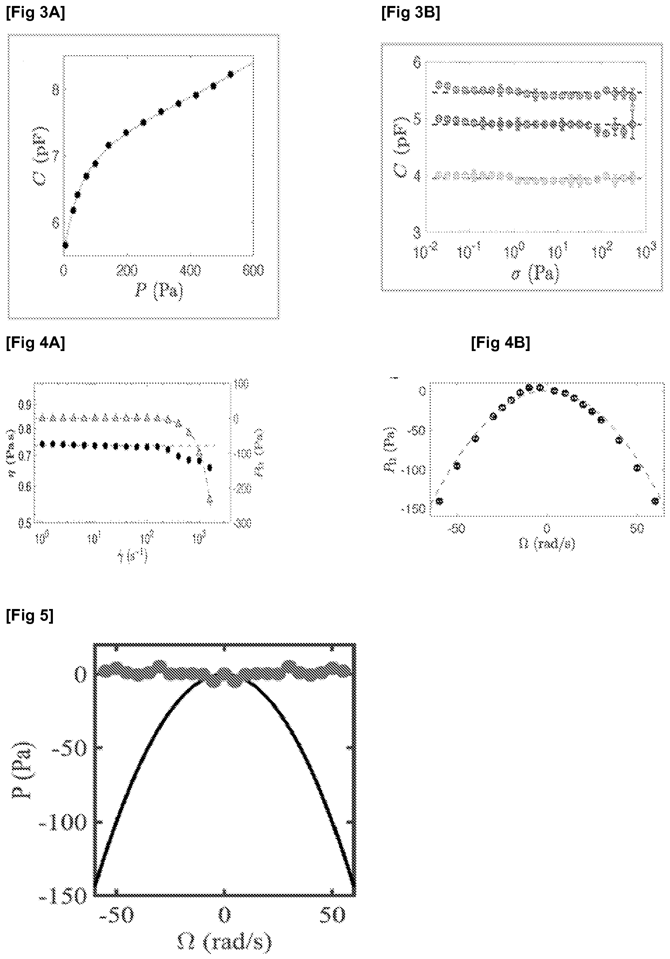

La figure 3A présente une courbe d'étalonnage typique d'un dispositif de l'invention, en particulier d'un dispositif comprenant la couche de diélectrique 500 selon le deuxième exemple de réalisation de la couche diélectrique 500 ci-avant mentionné pour des pressions appliquées P par un liquide sur la surface destinée à être en contact avec un liquide du dispositif. Cette courbe d'étalonnage montre la capacité C en fonction de la pression hydrostatique exercée par le liquide.

On peut également utiliser simultanément trois dispositifs selon le deuxième exemple de réalisation de la couche diélectrique 500 ci-avant mentionné. Dans cet exemple, l'un de ces dispositifs est positionné au centre d'une géométrie d'un rhéomètre rotatif (ie le plan-pln) (à une distance r = 0) et les deux autres sont placés en diagonale à une distance r = 12 mm du centre. On peut alors remarquer sur la figure 3B le comportement de la capacitance de ces trois dispositifs lorsque chacun d'eux est soumis à une contrainte de cisaillement variable σ exercé par un fluide.

La figure 4A présente quant à elle un profil de pression négatif dans un fluide Newtonien au moment de l'apparition de rouleaux de convections. En particulier, à l'aide du graphique de la figure 4A, il est possible de lire une viscosité η en fonction d'une contrainte normale moyenne d'une solution exercée sur le dispositif de l'invention comprenant la couche de diélectrique 500 selon le deuxième exemple de réalisation de la couche diélectrique 500 ci-avant mentionné, la solution comprenant de l'eau et du glycérol à une concentration volumique environ égale à 98% par rapport au volume total de la solution en fonction de la température appliquée sur le dispositif.

À l'aide de la figure 4B, on constate le profil de la pression normale moyenne mesurée par le dispositif de l'invention comprenant la couche de diélectrique 500 selon le deuxième exemple de réalisation de la couche diélectrique 500 ci-avant mentionné, en fonction de la vitesse angulaire Ω. du plan supérieur du rhéomètre, autrement dit le rotor qui fait face à un stator. Les courbes sont les ajustements paraboliques attendus par la théorie.

Chacune des courbes des figures 4A et 4B est l'ajustement parabolique attendu de la théorie. A titre de comparaison, la figure 5 présente le profil de la pression normale moyenne mesurée par le dispositif de l'invention comprenant une couche de diélectrique exempte de charges de carbone, en fonction de la vitesse angulaire Ω. du plan supérieur du rhéomètre On remarque que le profil obtenu (courbe horizontale) ne coïncide pas avec le profil théorique (courbe concave). Ainsi, pour avoir des résultats optimisés, il est préférable d'avoir une couche de diélectrique comprenant des charges de carbone.

Il est à noter que l'invention peut être appliquée à d'autres domaines que ceux de la rhéologie. Par exemple, l'invention peut être intégrée à des capteurs adaptés pour s'intégrer à des batteries.

### LISTE DE RÉFÉRENCES

[1] De Cagny, H., Fazilati, M., Habibi, M., Denn, M. M., & Bonn, D. (2019). The yield normal stress. Journal of Rheology, 63(2), 285-290.
[2] Publication de Mickaël Pruvost, Wilbert J. Smit1, Cécile Monteux, Philippe Poulin, Annie Colin dans la revue Nature (2019). Polymeric foams for flexible and highly sensitive lowpressure capacitive sensors.

## Revendications

1. Dispositif pour mesurer localement une contrainte mécanique normale exercée par un élément de contact, ledit dispositif comprenant :
- un substrat (200) comprenant, sur au moins une partie de sa surface, au moins une couche électriquement conductrice (300), dite électrode inférieure,
- une première couche polymérique (400) électriquement isolante présentant une épaisseur comprise entre 1 µm et 500 µm et comprenant au moins une cavité traversante (900), la première couche polymérique (400) étant disposée sur le substrat (200),
- une structure disposée sur la première couche polymérique (400), la structure comprenant les couches successives suivantes :
o une couche diélectrique (500) présentant une épaisseur comprise entre 50 µm et 2000 µm et disposée sur la première couche polymérique,
o une couche monolithique (600) électriquement conductrice, dite électrode supérieure, la couche monolithique (600) présentant une épaisseur comprise entre 5 µm et 50 µm, et
o une deuxième couche polymérique (700) comprenant une surface destinée à être en contact avec l'élément de contact, la deuxième couche polymérique (700) présentant une épaisseur comprise entre 10 et 500 µm,
la cavité traversante (900) étant définie par un volume et s'étendant entre la couche électriquement conductrice (300) et la couche diélectrique (500),
l'ensemble comprenant la cavité traversante (900), la couche diélectrique (500) et les électrodes inférieure et supérieure formant un condensateur,
la structure étant déformable élastiquement de sorte que lorsqu'une contrainte mécanique normale est exercée sur la surface de la deuxième couche polymérique (700) destinée à être en contact avec l'élément de contact le volume de la cavité traversante (900) varie de sorte à modifier la capacité du condensateur ;
la couche électriquement conductrice (300) étant discontinue de sorte à faire apparaitre un réseau d'électrodes inférieures appliquées sur le substrat (200).

2. Dispositif selon la revendication 1, dans lequel ladite couche diélectrique (500) présente un module d'Young compris entre 0.5 et 5 MPa.

3. Dispositif selon l'une des revendications 1 ou 2, comprenant en outre une connexion électrique (800) connectée à ladite couche électriquement conductrice (300), ladite connexion électrique (800) étant destinée à relier ladite couche électriquement conductrice (300) à un élément de mesure (20) de la contrainte mécanique normale exercée par l'élément de contact sur la deuxième couche polymérique (700) en fonction de la variation de capacité du condensateur.

4. Dispositif selon l'une des revendications 1 à 3, dans lequel :
- plusieurs couches électriquement conductrices (300) sont disposées sur le substrat,
- la première couche polymérique (400) comprend plusieurs cavités traversantes (900), chacune des cavités traversantes (900) étant définie par un volume et s'étendant entre une desdites couches électriquement conductrices (300) et la couche diélectrique (500).

5. Système pour mesurer localement une contrainte mécanique normale exercée par un élément de contact, ledit système comprenant :
- un dispositif selon l'une des revendications 1 à 4,
- un rhéomètre comprenant une surface inférieure (10B) destinée à être disposée du côté du substrat dudit dispositif et une surface supérieure (10A) destinée à être disposée du côté de la deuxième couche polymérique (700), et
- un élément de mesure (20) de la contrainte mécanique normale exercée par l'élément de contact sur la deuxième couche polymérique (700) en fonction de la variation de capacité du ou des condensateurs.

6. Système selon la revendication 5, dans lequel, lorsque ledit dispositif comprend plusieurs condensateurs, ledit élément de mesure (20) est relié à chaque couche électriquement conductrice (300) de chacun desdits condensateurs.

7. Utilisation du système selon l'une des revendications 5 ou 6 pour mesurer localement une contrainte mécanique normale exercée par un élément de contact, l'utilisation comprenant les étapes successives suivantes :
i. insertion du dispositif entre les surfaces inférieure et supérieure du rhéomètre,
ii. application d'un élément de contact entre la couche supérieure (10A) du rhéomètre et la surface de la deuxième couche polymérique (700), destinée à être en contact avec l'élément de contact, du dispositif,
iii. observation d'une variation de capacité du condensateur, et
iv. déduction de la contrainte mécanique normale exercée localement par l'élément de contact.

8. Procédé de fabrication d'un dispositif pour mesurer localement une contrainte mécanique normale exercée par un élément de contact, ledit procédé comprenant les étapes suivantes :
a) formation d'un ensemble comprenant un substrat et une première couche polymérique selon les étapes suivantes :
a1) fourniture d'un substrat (200) comprenant au moins un orifice débouchant à l'intérieur duquel est appliquée une couche électriquement conductrice (300) discontinue, dite électrode inférieure,
a2) application sur ledit substrat (200) d'une première couche polymérique (400) présentant une épaisseur comprise entre 1 µm et 500 µm et comprenant au moins une cavité traversante (900), ladite cavité traversante (900) étant appliquée en vis-à-vis de la couche électriquement conductrice (300), et
b) formation d'une structure selon les étapes suivantes :
b1) formation d'un mélange comprenant un polymère, un agent réticulant, des charges conductrices, un dispersant, un solvant, et optionnellement un tensioactif,
b2) mise en forme dudit mélange pour obtenir une couche diélectrique (500) présentant une épaisseur comprise entre 50 µm et 2000 µm,
b3) application, sur la couche diélectrique (500), d'un mélange conducteur comprenant un solvant et un matériau conducteur,
b4) évaporation du solvant pour obtenir une couche monolithique (600) électriquement conductrice, dite électrode supérieure, présentant une épaisseur comprise entre 5 µm et 20 µm et séchage,
b5) application, sur ladite couche monolithique (600) électriquement conductrice, d'un deuxième mélange polymérique pour obtenir une deuxième couche polymérique (700), b6) mise en forme de ladite deuxième couche polymérique (700) pour obtenir une épaisseur comprise entre 10 et 500 µm et une surface destinée à être en contact avec l'élément de contact, et réticulation,
c) application de ladite structure sur ladite première couche polymérique dudit ensemble.

9. Procédé selon la revendication 8, comprenant en outre, lors de l'étape a), une étape de création d'une connexion électrique (800) connectée à la couche électriquement conductrice (300) et susceptible de la relier à un élément de mesure (20).

10. Procédé selon l'une des revendications 8 ou 9, dans lequel le substrat (200) fourni à l'étape a) comprend plusieurs orifices débouchants à l'intérieur desquelles sont disposées des couches électriquement conductrices (300) et ladite première couche polymérique (400) disposée à l'étape b) comprend plusieurs cavités traversantes (900) dont chacune est appliquée en vis-à-vis de chacun desdites couches électriquement conductrices (300).

## Patentansprüche

1. Vorrichtung zur lokalen Messung einer durch ein Kontaktelement ausgeübten mechanischen Normalspannung, wobei die Vorrichtung umfasst:
- ein Substrat (200), das auf mindestens einem Teil seiner Fläche mindestens eine elektrisch leitende Schicht (300), die als untere Elektrode bezeichnet wird, umfasst,
- eine erste elektrisch isolierende Polymerschicht (400), die eine Dicke zwischen 1 µm und 500 µm aufweist und mindestens einen Durchgangshohlraum (900) umfasst, wobei die erste Polymerschicht (400) auf dem Substrat (200) angeordnet ist,
- eine auf der ersten Polymerschicht (400) angeordnete Struktur, wobei die Struktur die folgenden aufeinanderfolgenden Schichten umfasst:
o eine dielektrische Schicht (500), die eine Dicke zwischen 50 µm und 2.000 µm aufweist und die auf der ersten Polymerschicht angeordnet ist,
o eine elektrisch leitende monolithische Schicht (600), die als obere Elektrode bezeichnet wird, wobei die monolithische Schicht (600) eine Dicke zwischen 5 µm und 50 µm aufweist, und
o eine zweite Polymerschicht (700), die eine Fläche umfasst, die dazu bestimmt ist, mit dem Kontaktelement in Kontakt zu stehen, wobei die zweite Polymerschicht (700) eine Dicke zwischen 10 und 500 µm aufweist,
wobei der Durchgangshohlraum (900) durch ein Volumen definiert ist und sich zwischen der elektrisch leitenden Schicht (300) und der dielektrischen Schicht (500) erstreckt,
wobei die Anordnung den Durchgangshohlraum (900), die dielektrische Schicht (500) sowie die untere und obere Elektrode umfasst, die einen Kondensator bilden,
wobei die Struktur derart elastisch verformbar ist, dass sich, wenn eine mechanische Normalspannung auf die Fläche der zweiten Polymerschicht (700), die dazu bestimmt ist, mit dem Kontaktelement in Kontakt zu stehen, ausgeübt wird, das Volumen des Durchgangshohlraums (900) derart ändert, dass sich die Kapazität des Kondensators ändert;
wobei die elektrisch leitende Schicht (300) derart unterbrochen ist, dass ein Gitter aus unteren Elektroden, die auf das Substrat (200) aufgebracht sind, sichtbar wird.

2. Vorrichtung nach Anspruch 1, wobei die dielektrische Schicht (500) einen Youngschen Modul zwischen 0,5 und 5 MPa aufweist.

3. Vorrichtung nach einem der Ansprüche 1 oder 2, ferner umfassend eine elektrische Verbindung (800), die mit der elektrisch leitenden Schicht (300) verbunden ist, wobei die elektrische Verbindung (800) dazu bestimmt ist, die elektrisch leitende Schicht (300) mit einem Messelement (20) zur Messung der durch das Kontaktelement auf die zweite Polymerschicht (700) ausgeübten mechanischen Normalspannung in Abhängigkeit von der Kapazitätsänderung des Kondensators zu verbinden.

4. Vorrichtung nach einem der Ansprüche 1 oder 3, wobei:
- mehrere elektrisch leitende Schichten (300) auf dem Substrat angeordnet sind,
- wobei die erste Polymerschicht (400) mehrere Durchgangshohlräume (900) umfasst, wobei jeder der Durchgangshohlräume (900) durch ein Volumen definiert ist und sich zwischen einer der elektrisch leitenden Schichten (300) und der dielektrischen Schicht (500) erstreckt.

5. System zur lokalen Messung einer durch ein Kontaktelement ausgeübten mechanischen Normalspannung, wobei das System umfasst:
- eine Vorrichtung nach einem der Ansprüche 1 bis 4,
- ein Rheometer, das eine untere Fläche (10B), die dazu bestimmt ist, auf der Seite des Substrats der Vorrichtung angeordnet zu werden, und eine obere Fläche (10A), die dazu bestimmt ist, auf der Seite der zweiten Polymerschicht (700) angeordnet zu werden, umfasst und
- ein Messelement (20) zur Messung der durch das Kontaktelement auf die zweite Polymerschicht (700) ausgeübten mechanischen Normalspannung in Abhängigkeit von der Kapazitätsänderung des Kondensators bzw. der Kondensatoren.

6. System nach Anspruch 5, wobei, wenn die Vorrichtung mehrere Kondensatoren umfasst, das Messelement (20) mit jeder elektrisch leitenden Schicht (300) jedes der Kondensatoren verbunden ist.

7. Verwendung des Systems nach einem der Ansprüche 5 oder 6 zur lokalen Messung einer durch ein Kontaktelement ausgeübten mechanischen Normalspannung, wobei die Verwendung die folgenden aufeinanderfolgenden Schritte umfasst:
i. Einsetzen der Vorrichtung zwischen die untere und obere Fläche des Rheometers,
ii. Anbringen eines Kontaktelements zwischen der oberen Schicht (10A) des Rheometers und der Fläche der zweiten Polymerschicht (700), die dazu bestimmt ist, mit dem Kontaktelement in Kontakt zu stehen,
iii. Beobachten einer Kapazitätsänderung des Kondensators, und
iv. Ableiten der durch das Kontaktelement ausgeübten mechanischen Normalspannung.

8. Verfahren zur Herstellung einer Vorrichtung zur lokalen Messung einer durch ein Kontaktelement ausgeübten mechanischen Normalspannung, wobei das Verfahren wie folgenden Schritte umfasst:
a) Bilden einer Anordnung, die ein Substrat und eine erste Polymerschicht umfasst, gemäß den folgenden Schritten:
a1) Bereitstellen eines Substrats (200), das mindestens eine Durchgangsöffnung umfasst, in deren Innerem eine unterbrochene elektrisch leitende Schicht (300), die als untere Elektrode bezeichnet wird, aufgebracht ist,
a2) Aufbringen einer ersten Polymerschicht (400) auf das Substrat (200), wobei die Polymerschicht eine Dicke zwischen 1 µm und 500 µm aufweist und mindestens einen Durchgangshohlraum (900) umfasst, wobei der Durchgangshohlraum (900) gegenüber der elektrisch leitenden Schicht (300) aufgebracht wird, und
b) Bilden einer Struktur gemäß den folgenden Schritten:
b1) Bilden eines Gemisches, das ein Polymer, ein Vernetzungsmittel, leitende Füllstoffe, ein Dispergiermittel, ein Lösungsmittel und optional ein Tensid umfasst,
b2) Formen des Gemisches, sodass eine dielektrische Schicht (500) mit einer Dicke zwischen 50 µm und 2000 µm erhalten wird,
b3) Aufbringen eines leitenden Gemisches, das ein Lösungsmittel und ein leitendes Material umfasst, auf die dielektrische Schicht (500),
b4) Verdampfen des Lösungsmittels, sodass eine elektrisch leitende monolithische Schicht (600), die als obere Elektrode bezeichnet wird, mit einer Dicke zwischen 5 µm und 20 µm erhalten wird, und Trocknen,
b5) Aufbringen eines zweiten Polymergemisches auf die elektrisch leitende monolithische Schicht (600), sodass eine zweite Polymerschicht (700) erhalten wird.
b6) Formen der zweiten Polymerschicht (700), sodass eine Dicke zwischen 10 und 500 µm und eine Fläche, die dazu bestimmt ist, mit dem Kontaktelement in Kontakt zu stehen, erhalten wird, und Vernetzen,
c) Aufbringen der Struktur auf die erste Polymerschicht der Anordnung.

9. Verfahren nach Anspruch 8, ferner umfassend in Schritt a) einen Schritt zum Herstellen einer elektrischen Verbindung (800), die mit der elektrisch leitenden Schicht (300) verbunden ist und diese mit einem Messelement (20) verbinden kann.

10. Verfahren nach einem der Ansprüche 8 oder 9, wobei das in Schritt a) bereitgestellte Substrat (200) mehrere Durchgangsöffnungen umfasst, in deren Innerem elektrisch leitende Schichten (300) angeordnet sind, und wobei die in Schritt b) angeordnete erste Polymerschicht (400), mehrere Durchgangshohlräume (900) umfasst, von denen jeder gegenüber jeder der elektrisch leitenden Schichten (300) angeordnet ist.

## Claims

1. Device for locally measuring a normal mechanical stress exerted by a contact element, said device comprising:
- a substrate (200) comprising, over at least a part of its surface, at least one electrically conductive layer (300), referred to as the lower electrode,
- a first electrically insulating polymeric layer (400) having a thickness of between 1 µm and 500 µm and comprising at least one through-cavity (900), the first polymeric layer (400) being arranged on the substrate (200),
- a structure arranged on the first polymeric layer (400), the structure comprising the following successive layers:
o a dielectric layer (500) having a thickness of between 50 µm and 2000 µm and arranged on the first polymeric layer,
∘ an electrically conductive monolithic layer (600), referred to as the upper electrode, the monolithic layer (600) having a thickness of between 5 µm and 50 µm, and
∘ a second polymeric layer (700) comprising a surface intended to be in contact with the contact element, the second polymeric layer (700) having a thickness of between 10 and 500 µm,
the through-cavity (900) being defined by a volume and extending between the electrically conductive layer (300) and the dielectric layer (500),
the assembly comprising the through-cavity (900), the dielectric layer (500), and the lower and the upper electrode forming a capacitor,
the structure being elastically deformable so that when a normal mechanical stress is exerted on the surface of the second polymeric layer (700) intended to be in contact with the contact element, the volume of the through-cavity (900) varies so as to modify the capacitance of the capacitor;
the electrically conductive layer (300) being discontinuous so as to reveal an array of lower electrodes applied to the substrate (200).

2. Device according to claim 1, wherein said dielectric layer (500) has a Young's modulus of between 0.5 and 5 MPa.

3. Device according to either of claims 1 or 2, further comprising an electrical connection (800) connected to said electrically conductive layer (300), said electrical connection (800) being intended to connect said electrically conductive layer (300) to an element (20) for measuring the normal mechanical stress exerted by the contact element on the second polymeric layer (700) as a function of the variation in capacitance of the capacitor.

4. Device according to any of claims 1 to 3, wherein:
- a plurality of electrically conductive layers (300) are arranged on the substrate,
- the first polymeric layer (400) comprises a plurality of through-cavities (900), each of the through-cavities (900) being defined by a volume and extending between one of said electrically conductive layers (300) and the dielectric layer (500).

5. System for locally measuring a normal mechanical stress exerted by a contact element, said system comprising:
- a device according to any of claims 1 to 4,
- a rheometer comprising a lower surface (10B) intended to be arranged on the side of the substrate of said device and an upper surface (10A) intended to be arranged on the side of the second polymeric layer (700), and
- an element (20) for measuring the normal mechanical stress exerted by the contact element on the second polymeric layer (700) as a function of the variation in capacitance of the capacitor or capacitors.

6. System according to claim 5, wherein, when said device comprises a plurality of capacitors, said measurement element (20) is connected to each electrically conductive layer (300) of each of said capacitors.

7. Use of the system according to either of claims 5 or 6 for locally measuring a normal mechanical stress exerted by a contact element, the use comprising the following successive steps:
i. inserting the device between the lower and the upper surface of the rheometer,
ii. applying a contact element between the upper layer (10A) of the rheometer and the surface of the second polymeric layer (700), intended to be in contact with the contact element, of the device,
iii. observing a variation in capacitance of the capacitor, and
iv. deducing the normal mechanical stress exerted locally by the contact element.

8. Method for manufacturing a device for locally measuring a normal mechanical stress exerted by a contact element, said method comprising the following steps:
a) forming an assembly comprising a substrate and a first polymeric layer according to the following steps:
a1) providing a substrate (200) comprising at least one through-orifice inside which a discontinuous electrically conductive layer (300), referred to as the lower electrode, is applied,
a2) applying to said substrate (200) a first polymeric layer (400) having a thickness of between 1 µm and 500 µm and comprising at least one through-cavity (900), said through-cavity (900) being applied facing the electrically conductive layer (300), and
b) forming a structure according to the following steps:
b1) forming a mixture comprising a polymer, a cross-linking agent, conductive fillers, a dispersant, a solvent, and optionally a surfactant,
b2) shaping said mixture in order to obtain a dielectric layer (500) having a thickness of between 50 µm and 2000 µm,
b3) applying, to the dielectric layer (500), a conductive mixture comprising a solvent and a conductive material,
b4) evaporating the solvent in order to obtain an electrically conductive monolithic layer (600), referred to as the upper electrode, having a thickness of between 5 µm and 20 µm, and drying,
b5) applying, to said electrically conductive monolithic layer (600), a second polymeric mixture in order to obtain a second polymeric layer (700),
b6) shaping said second polymeric layer (700) in order to obtain a thickness of between 10 and 500 µm and a surface intended to be in contact with the contact element, and cross-linking,
c) applying said structure to said first polymeric layer of said assembly.

9. Method according to claim 8, further comprising, during step a), a step of creating an electrical connection (800) connected to the electrically conductive layer (300) and capable of connecting it to a measurement element (20).

10. Method according to either of claims 8 or 9, wherein the substrate (200) provided in step a) comprises a plurality of through-orifices inside which electrically conductive layers (300) are arranged and said first polymeric layer (400) arranged in step b) comprises a plurality of through-cavities (900) each of which is applied facing each of said electrically conductive layers (300).
